# EUROPÄISCHE PATENTSCHRIFT

(11) **EP 4 396 715 B1**
(45) Veröffentlichungstag und Bekanntmachung des Hinweises auf die Patenterteilung: **04.03.2026**
(21) Anmeldenummer: 22786809.8
(22) Anmeldetag: 26.09.2022
(51) Int. Cl.: G06F 21/57

(54) **AUTOMATISCHE ANALYSE EINER AUSNUTZBARKEIT VON SCHWACHSTELLEN EINES SOFTWARE-IMAGES**
AUTOMATIC ANALYSIS OF EXPLOITATION OF VULNERABILITY OF A SOFTWARE IMAGE
ANALYSE AUTOMATIQUE D'UNE EXPLOITABILITÉ DES POINTS FAIBLES D'UNE IMAGE LOGICIELLE

(30) Priorität: 15.10.2021 DE 102021211676; 27.10.2021 EP 21204907
(43) Veröffentlichungstag der Anmeldung: 10.07.2024
(73) Patentinhaber: Siemens Aktiengesellschaft, 80333 München (DE)
(72) Erfinder: KNIERIM, Christian, 81373 München (DE); LUKAS, Klaus, 81739 München (DE)
(74) Vertreter: Siemens Patent Attorneys
(86) Internationale Anmeldenummer: PCT/EP2022/076648
(87) Internationale Veröffentlichungsnummer: WO 2023/061733

(56) Entgegenhaltungen:
- CN-A- 111 259 406
- CN-A- 111 259 406
- US-A1- 2016 314 302
- US-A1- 2016 314 302
- US-A1- 2017 109 536
- US-A1- 2017 109 536
- US-B2- 9 400 889
- US-B2- 9 400 889

## Beschreibung

Die Erfindung betrifft Verfahren zur automatischen Analyse einer Ausnutzbarkeit von Schwachstellen eines auf einem Zielrechner ausgeführten Software-Images.

Als Software-Image wird ein Abbild eines Softwareprogramms bezeichnet, das alle Komponenten des Softwareprogramms umfasst. Komponenten des Softwareprogramms sind neben einem Anwendungsprogramm beispielsweise auch Software-Bibliotheken oder Binärdateien, die bei der Ausführung des Anwendungsprogramms aufgerufen und ausgeführt werden. Das Software-Image kann direkt auf einer Laufzeitumgebung eines Rechners ausgeführt werden. Software-Images können auch als Container-Image mittels Containervirtualisierung gekapselt erstellt und ausgeführt werden, beispielsweise in Cloudumgebungen. Nachfolgend wird die Abkürzung SW zur besseren Lesbarkeit synonym für das Wort Software verwendet.

Containervirtualisierung ist eine Methode, bei der mehrere Instanzen eines Betriebssystems isoliert voneinander einen Betriebssystemkern eines Gastrechners nutzen können. Software Container, im Weiteren kurz Container genannt, stellen somit eine leichtgewichtige Art der Virtualisierung einer Laufzeitumgebung auf einem Gastrechner, auch Hostsystem genannt, dar und kapseln eine in einem Container betriebene Software-Anwendung vom darunterliegenden Hostsystem ab. Software-Anwendungen werden mittlerweile in vielen Bereichen mittels Container implementiert, beispielsweise in der Industrieautomation und der Prozesssteuerung, aber auch in Transportsystemen oder der Gebäudeautomatisierung.

Um einen Container auf dem Hostsystem starten zu können, wird ein Containerimage benötigt, welches neben dem Anwendungssoftware auch die für die Anwendungssoftware erforderlichen Binärprogramme und Bibliotheken enthält. Aus dem Containerimage wird auf dem Hostsystem ein Container, genauer eine Containerinstanz, erstellt und auf der Laufzeitumgebung des Hostsystems ausgeführt.

Die Software-Zusammenstellung der Container-Instanzen verändert sich nicht mehr über die Laufzeit hinweg. Gleiches gilt für SW-Anwendungen auf nicht-containerisierten Geräten, die über vorgefertigte SW-Images installiert werden, deren Konfiguration und Zusammensetzung sich nach der erfolgten Installation nicht mehr verändert. Beispiele hierfür sind **z.B.** Cloud-Instanzen, die üblicherweise nicht gepatcht werden, sondern stattdessen mit Hilfe neuer Betriebssystem-Images komplett neu erstellt werden. Weitere Beispiele hierfür sind Geräte wie Switches oder Firewalls, auf die eine fertige Firmware installiert wird. Die Firmware wird üblicherweise nicht gepatcht, sondern der Softwarestand wird durch Einspielen der kompletten Firmware installiert.

Das SW-Image wird zwar immer mit den gleichen SW-Komponenten auf eine Laufzeitumgebung der Geräte geladen, es müssen jedoch nicht immer alle SW-Komponenten in der Laufzeitumgebung aktiviert sein. Grund dafür können unterschiedliche Konfigurationen der Laufzeitumgebung, z.B. Lizenzschlüssel, sein, die die Nutzung bestimmter Komponenten nicht gestatten.

US 2017/0109536 Al offenbart ein Verfahren zum Detektieren von Schwachstellen in einem Basis-Image von Software-Containern. Auf den Erhalt eines Events, wird Inhalt des Basis-Images extrahiert und ein Detektions-Event erzeugt, wenn eine Schwachstelle gefunden wurde.

US 9 400 889 B2 offenbart ein Verfahren zur automatischen Analyse einer Ausnutzbarkeit von Schwachstellen eines Source-Codes oder eines ausführbaren Codes einer Software. Ein Angriffsverwaltungsmodul ermittelt durch statische Analyse potenzielle Schwachstellen im Code. Ein Fehlerinjektionsmodul verarbeitet die ermittelten Schwachstellen, um Schwachstellentests auf die Software anzuwenden. Das Fehlerinjektionsmodul testet anfällige Teile des Codes systematisch auf bekannte und benutzerdefinierte Angriffe. Dabei wendet es zum Beispiel Exploits gegen Eingabefelder, Cookies, Kopfzeilen und dergleichen an. Die Leistung des Codes unter diesen Umständen wird dann analysiert und die Ergebnisse werden dem Benutzer mitgeteilt.

CN 111 259 406 A offenbart das Erzeugen eines Container-Images, welches ein zu analysierendes Software-Image und auf das Software-Image anzuwendende Exploits enthält. Das Container-Image wird dann in einer Laufzeit-Umgebung ausgeführt, um festzustellen, ob das zu analysierende Software-Image für die Exploits anfällig ist.

US 2016/314302 A1 offenbart das Ausführen eines Container-Images in verschiedenen Konfigurationen einer Laufzeitumgebung eines Zielrechners. In den Container werden dann Exploits injiziert um herauszufinden, in welchen Konfiguration der Laufzeitumgebung das Container-Image durch die Exploits angreifbar ist.

Dadurch entsteht das Problem, dass Schwachstellen und somit Sicherheitslücken eines SW-Images zwar bekannt sind, jedoch nicht bekannt ist, ob diese bekannten Sicherheitslücken auch auf der Laufzeitumgebung eines bestimmten Geräts ausnutzbar sind.

Es ist somit eine Aufgabe der vorliegenden Erfindung, ein Verfahren zu schaffen, bei dem die Ausnutzbarkeit eines SW-Images, das auf einem bestimmten Zielgerät installiert ist, schnell und mit geringem Aufwand ermittelt und ausgetauscht werden kann.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zur automatischen Analyse einer Ausnutzbarkeit von Schwachstellen eines auf einem Zielrechner ausgeführten Software-Images, umfassend
- Identifizieren aller im dem SW-Image enthaltenen Software-Komponenten,
- Ermitteln von Schwachstellen der identifizierten Software-Komponente für jede SW-Komponente des SW-Images anhand einer Schwachstellendatenbank,
- Ermitteln von allen der mindestens einen ermittelten Schwachstelle der Software-Komponente zugeordneten Exploits für jede identifizierte SW-Komponente anhand einer Exploit-Datenbank,
- Zuordnen der ermittelten Exploits zu dem Software-Image, und
- Ausführen des SW-Images und der dem SW-Image zugeordneten Exploits auf einer für den Zielrechner spezifischen Konfiguration einer Laufzeitumgebung,
- Bestätigen der Ausnutzbarkeit der mindestens einen identifizierten Schwachstelle auf der spezifischen Konfiguration der Laufzeitumgebung, wenn das Ausführen des mindestens einen Exploits zu einer Ausnutzung der Schwachstelle führt, wobei ein modifiziertes, nicht ausnutzbares Software-Image abhängig von einer in einer Zusammenbauvorrichtung des Herstellers zum Zusammenbauen des Software-Images hinterlegten Richtlinie und abhängig von der mindestens einen bestätigten ausnutzbaren Schwachstelle erstellt wird und das modifizierte Software-Image dem einen oder allen Zielrechnern, die die spezifische Konfiguration der Laufzeitumgebung aufweisen, bereitgestellt wird.

Ein Exploit ist in der elektronischen Datenverarbeitung eine systematische Möglichkeit, Schwachstellen auszunutzen, die bei der Entwicklung eines Programms entstanden sind. Der Exploit umfasst Programmcode, die angewandt auf die SW-Komponente Schwachstellen, beispielsweise Sicherheitslücken und Fehlfunktionen von Programmen, hier der SW-Komponente ausnutzt, meist, um sich Zugang zu Ressourcen zu verschaffen oder in den Zielrechner einzudringen bzw. diesen zu beeinträchtigen. Somit können systematisch alle Schwachstellen und die zur Überprüfung der Ausnutzbarkeit der Schwachstellen notwendigen Exploits für ein gegebenes SW-Image zusammengestellt werden. Dadurch ist ein gezieltes Überprüfen der Ausnutzbarkeit der Schwachstellen des SW-Images auf der Laufzeitumgebung des Zielrechners, auf dem das SW-Image installiert wurde, möglich. Wird eine Schwachstellen-behaftete SW-Komponente des SW-Images auf der für den Zielrechner spezifischen Konfiguration der Laufzeitumgebung nicht aktiviert und damit nicht ausgeführt, so ist die Schwachstelle in dieser Zielrechner spezifischen Konfiguration der Laufzeitumgebung nicht ausnutzbar. Das SW-Image kann ohne Sicherheitsprobleme ausgeführt werden. Es werden somit lediglich diejenigen Schwachstellen als ausnutzbar bestätigt, die auf der Zielrechner-spezifischen Konfiguration der Laufzeitumgebung tatsächlich zu Sicherheitslücken und Fehlfunktionen von SW-Komponente genutzt werden können.

In einer vorteilhaften Ausführungsform wird die mindestens eine ausnutzbare Schwachstelle an einen Nutzer des Zielrechners und/oder einen Hersteller des SW-Images gemeldet.

Somit werden durch das Verfahren lediglich solche Fälle an den Nutzer des Zielrechners oder den Hersteller des SW-Images gemeldet, die tatsächlich für den individuellen Zielrechner problematisch sind.

In einer vorteilhaften Ausführungsform werden die Verfahrensschritte nach einem Zusammenbauen des SW-Images beim Hersteller und/oder in vorgegebenen zeitlichen Abständen und/oder nach vorgegebenen Ereignissen ausgeführt.

Durch das Durchführen des Verfahrens nach einem Zusammenbauen des SW-Images kann beispielsweise der Hersteller alarmiert werden, dass das SW-Image in der Konfiguration der Laufzeitumgebung des Zielrechners Schwachstellen enthält und diese ausnutzbar sind und automatisch eine Aktualisierung des SW-Images angestoßen. Nach vorgegebenen Ereignissen, wie beispielsweise einer Verfügbarkeit einer neuen Version bzw. Patches des SW-Image, kann für die Zielrechner spezifische Konfiguration der Laufzeitumgebung automatisch eine Ausnutzbarkeitsüberprüfung stattfinden und die neue Version nur eingespielt werden, wenn keine ausnutzbare Schwachstelle gemeldet wird.

In einer vorteilhaften Ausführungsform wird ein modifiziertes, nicht ausnutzbares SW-Image abhängig von einer in einer Zusammenbauvorrichtung des Herstellers zum Zusammenbauen des SW-Images hinterlegten Richtlinie und abhängig von der mindestens einen bestätigten ausnutzbaren Schwachstelle erstellt.

Durch die in der Zusammenbauvorrichtung, auch Build-System genannt, hinterlegte Richtlinie können die bestätigten ausnutzbaren Schwachstellen systematisch behoben und ein modifiziertes SW-Image erstellt werden, in dem die identifizierten und ausnutzbaren Schwachstellen entweder entfernt oder nicht ausnutzbar sind. Durch die Richtlinie kann das modifizierte SW-Image vollständig oder zumindest teilweise automatisch erstellt werden.

In einer vorteilhaften Ausführungsform wird das modifizierte SW-Image bereitgestellt, insbesondere auf einem Software-Repositorium, und automatisch in den Zielrechner eingespielt.

Somit kann das modifizierte SW-Image als publizierter Patch automatisch auf dem Zielrechner installiert werden.

In einer vorteilhaften Ausführungsform wird das modifizierte SW-Image bereitgestellt wird, insbesondere auf einem Software-Repositorium, und das modifizierte SW-Image automatisch in weitere Zielrechner mit der gleichen spezifischen Konfiguration der Laufzeitumgebung eingespielt.

Somit kann nicht nur ein Zielsystem, sondern alle oder zumindest weitere Zielsysteme mit der gleichen Konfiguration der Laufzeitumgebung aktualisiert und somit gegen Angriffe geschützt werden. Eine Analyse der Ausnutzbarkeit muss nicht erneut für die weiteren Zielsysteme erfolgen.

In einer vorteilhaften Ausführungsform werden die SW-Komponenten und deren Schwachstellen auf einem Referenzrechner oder auf einer Zusammenbauvorrichtung des Herstellers identifiziert.

Das Identifizieren der SW-Komponenten auf der Zusammenbauvorrichtung hat den Vorteil, dass Information zu den im SW-Image enthaltenen SW-Komponenten ohne oder mit nur geringem Zusatzaufwand und somit schnell verfügbar ist. Des Weiteren kann eine Liste der SW-Komponenten und deren Schwachstellen mit jedem freigegebenen SW-Image bereitgestellt werden. Das Ermitteln auf einem Referenzrechner hat den Vorteil, dass vor dem tatsächlichen Installieren des SW-Images auf dem Zielrechner erfolgt.

In einer vorteilhaften Ausführungsform werden die SW-Komponenten abhängig von einer Signatur der SW-Komponente oder mittels eines Paketmanagers innerhalb des SW-Images identifiziert.

Der Paketmanager ist in einem SW-Image üblicherweise enthalten, sodass kaum Modifikationen und Zusatzaufwand für das Ermitteln entstehen. Das Ermitteln anhand der Signatur der SW-Komponente ist zuverlässig und ermöglicht zusätzlich eine Integritätsprüfung der SW-Komponente.

In einer vorteilhaften Ausführungsform wird zusätzliche Herstellungsinformation, insbesondere eine Versionskennung, zu der mindestens einen identifizierten SW-Komponenten ermittelt.

Dadurch kann zwischen verschiedenen Varianten der SW-Komponente unterschieden und schneller die für diese Variante bekannten Schwachstellen zugeordnet werden.

In einer vorteilhaften Ausführungsform wird ein für das SW-Image spezifisches Schwachstellenprofil umfassend die identifizierten SW-Komponenten, die ermittelten Schwachstellen und die ermittelten Exploits auf eine Image-Schwachstellen-Datenbank abgespeichert.

Bei einer Installation des SW-Images auf einem weiteren Zielrechner kann durch ein Abrufen des SW-Image spezifischen Schwachstellenprofils von der Image-Schwachstellen-Datenbank die Ausnutzbarkeit des SW-Images auf der für den weiteren Zielrechner spezifischen Konfiguration überprüft werden ohne erneut die SW-Komponenten, Schwachstellen und Exploits zu bestimmen. Somit ist eine zeitlich und Rechenkapazitäteffiziente Ausnutzbarkeitsüberprüfung möglich.

In einer vorteilhaften Ausführungsform werden unterschiedliche Konfigurationen von Laufzeitumgebungen, bevorzugt mit den entsprechend konfigurierten Zielrechnern, auf denen das SW-Image ausgeführt wird, anhand einer Inventardatenbank ermittelt.

Somit können die unterschiedlichen Konfigurationen von Laufzeitumgebungen einfach ermittelt werden, und vor dem Aufspielen oder während der Laufzeit des SW-Images die Ausnutzbarkeit der Schwachstellen des SW-Image auf der vorliegenden Konfiguration überprüft werden. Bevorzugt sind in der Inventardatenbank auch der Konfiguration der Laufzeitumgebungen die einzelnen, entsprechend konfigurierten Zielrechner zugeordnet und abgespeichert.

In einer vorteilhaften Ausführungsform wird die Konfiguration der Laufzeitumgebung des Zielrechners, auf der das SW-Image ausgeführt wird, vom Zielrechner ermittelt und an eine Inventardatenbank übermittelt.

Dies wird bevorzugt mit eine Zusatzfunktion, beispielsweise in Form eines Plugins, oder durch einen auf dem Zielrechner betriebenen Agenten auf der Laufzeitumgebung ermittelt. Somit kann der Zielrechner selbstständig seine Konfiguration der Laufzeitumgebung melden.

In einer vorteilhaften Ausführungsform wird die Konfiguration der Laufzeitumgebung des Zielrechners, auf der das SW-Image ausgeführt wird, von einem Konfigurationsscanner ermittelt und an die Inventardatenbank übermittelt.

Somit kann die Konfiguration der Laufzeitumgebung auch von Zielrechnern ohne Agenten oder Plugin ermittelt werden. Zielrechner müssen nicht erweitert werden, bzw. nicht erweiterbare Zielrechner können dennoch in der Inventardatenbank erfasst werden.

In einer vorteilhaften Ausführungsform ermittelt der Konfigurationsscanner die Konfiguration der Laufzeitumgebung des Zielrechners abhängig von offenen Diensten auf dem Zielrechner, Antwortnachrichten des Zielrechners auf an den Zielrechner gestellte Abfragen, oder einer Kennung des Ziel-rechners.

Gemäß einem zweiten Aspekt betrifft die Erfindung ein System zur automatischen Analyse einer Ausnutzbarkeit von Schwachstellen eines auf einem Zielrechner ausgeführten Software-Images, umfassend eine Analyseeinheit, die derart ausgebildet ist
- alle im dem SW-Image enthaltenen Software-Komponenten zu identifizieren,
- Schwachstellen der identifizierten Software-Komponente für jede SW-Komponente des SW-Images anhand einer Schwachstellendatenbank zu ermitteln,
- alle der mindestens einen identifizierten Schwachstelle der Software-Komponente zugeordneten Exploits für jede identifizierte Software-Komponente anhand einer Exploit-Datenbank zu ermitteln, und
- die ermittelten Exploits dem Software-Image zuzuordnen, und eine Überprüfungseinheit, die derart ausgebildet ist,
   eine Testeinheit, die derart ausgebildet ist,
- das SW-Image und die dem SW-Image zugeordneten Exploits auf einer für den Zielrechner spezifischen Konfiguration der Laufzeitumgebung auszuführen,
- die Ausnutzbarkeit der identifizierten Schwachstellen auf der spezifischen Konfiguration der Laufzeitumgebung zu bestätigen, wenn das Ausführen des mindestens einen Exploits zu einer Ausnutzung der Schwachstelle führt, und
- die ausnutzbaren Schwachstellen an einen Nutzer des Zielrechners und/oder einen Hersteller des SW-Images zu melden, wobei ein modifiziertes, nicht ausnutzbares Software-Image abhängig von einer in einer Zusammenbauvorrichtung des Herstellers zum Zusammenbauen des Software-Images hinterlegten Richtlinie und abhängig von der mindestens einen bestätigten ausnutzbaren Schwachstelle erstellt wird und das modifizierte Software-Image dem einen oder allen Zielrechnern, die die spezifische Konfiguration der Laufzeitumgebung aufweisen, bereitgestellt wird..

In einer Ausführungsform umfasst das System des Weiteren eine Image-Schwachstellen-Datenbank, die derart ausgebildet ist, ein das SW-Image spezifisches Schwachstellenprofil umfassend die identifizierten SW-Komponenten, die ermittelten Schwachstellen und die ermittelten Exploits zu speichern.

Durch das erfindungsgemäße System kann eine automatische Ausnutzbarkeitsprüfung durchgeführt werden, d.h. es kann überprüft werden, ob identifizierte Schwachstellen tatsächlich für einen Angriff auf dem Zielrechner mit der bestimmten Konfiguration seiner Laufzeitumgebung verwendet werden können.

Ein dritter Aspekt der Erfindung betrifft ein Computerprogrammprodukt, umfassend ein nicht flüchtiges computerlesbares Medium, das direkt in einen Speicher eines digitalen Computers ladbar ist, umfassend Programmcodeteile, die bei Ausführung der Programmcodeteile durch den digitalen Computer diesen veranlassen, die Schritte des Verfahrens durchzuführen.

Sofern es in der nachfolgenden Beschreibung nicht anders angegeben ist, beziehen sich die Begriffe "ermitteln", "zuordnen", "ausführen", "bestätigen", "melden" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliege können, beispielsweise als elektrische Impulse. Das System und darin optional enthaltene Komponenten, wie beispielsweise eine Image-Schwachstellen-Datenbank, eine Schwachstellendatenbank, eine Exploitdatenbank, eine Inventardatenbank, Zielrechner und dergleichen kann bzw. können einen oder mehrere Prozessoren, umfassen. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln.

Ein Computerprogrammprodukt, wie z. B. ein Computerprogrammmittel, kann beispielsweise als Speichermedium, wie zum Beispiel einer Speicherkarte, USB-Stick, CD-ROM, DVD oder auch in Form einer herunterladbaren Datei von einem Server in einem Netzwerk bereitgestellt oder geliefert werden.

Ausführungsbeispiele des erfindungsgemäßen Verfahrens und der erfindungsgemäßen Anordnung sind in den Zeichnungen beispielhaft dargestellt und werden anhand der nachfolgenden Beschreibung näher erläutert. Es zeigen:
- Fig. 1: ein Ausführungsbeispiel des erfindungsgemäßen Verfahrens als Ablaufdiagramm;
- Fig. 2: ein erstes Ausführungsbeispiel der erfindungsgemäßen Systems in schematischer Darstellung; und

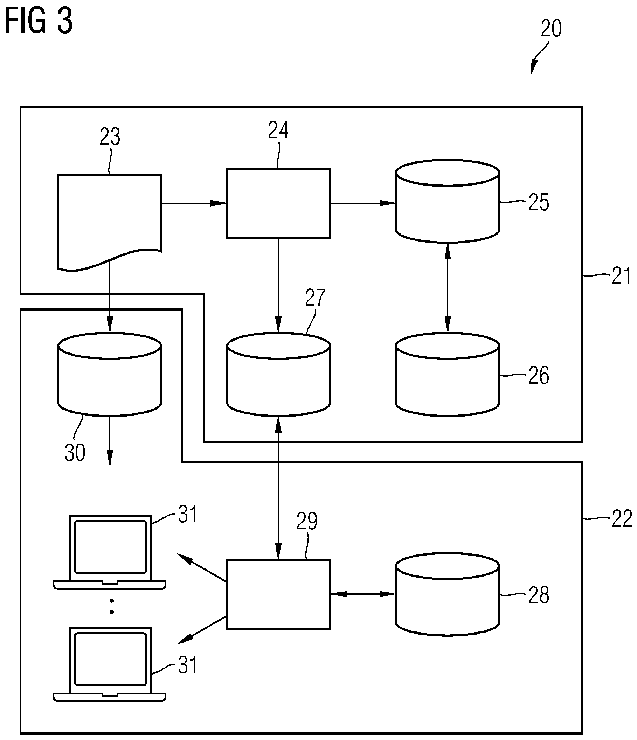

- Fig. 3: ein zweites Ausführungsbeispiel der erfindungsgemäßen Systems mit automatischer Aktualisierung des SW-Images auf weiteren Zielrechnern in schematischer Darstellung.

Einander entsprechende Teile sind in allen Figuren mit den gleichen Bezugszeichen versehen.

Software-Images enthalten potenziell Schwachstellen, die über Analyse-Tools identifiziert werden können. Ein grundlegendes Problem ist aber eine automatische Ausnutzbarkeitsprüfung, in der ermittelt wird, ob die Schwachstellen tatsächlich für einen Angriff verwendet werden können. Dieses Problem stellt sich für alle Software-Images, aber besonders für Container-Images, da hier ein fließender Übergang von statischer Analyse des Container-Images zu einer dynamischen Verifikation der Ausnutzbarkeit möglich ist.

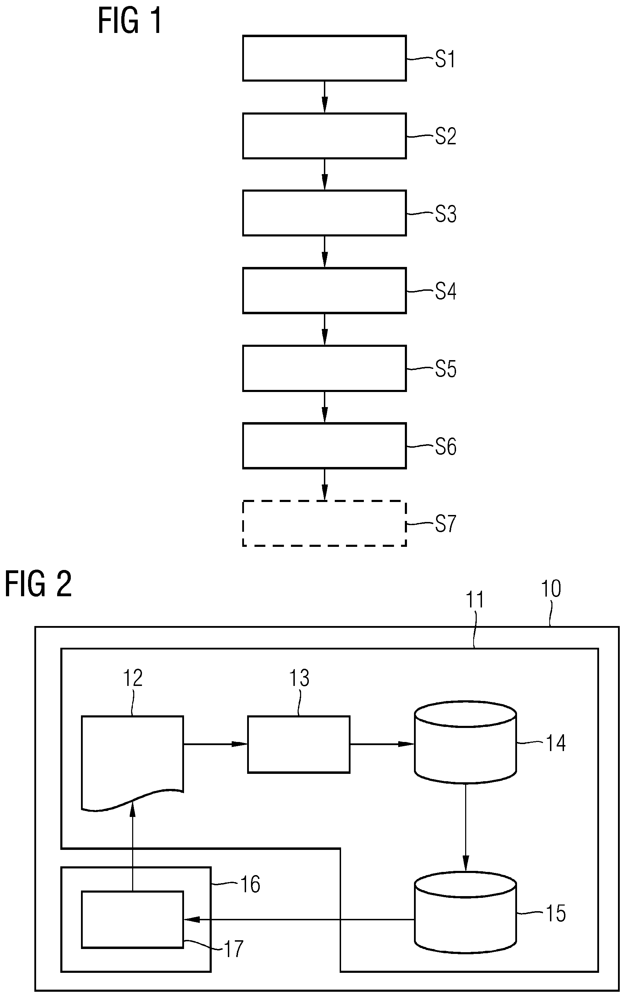

In Figur 1 sind die einzelnen Verfahrensschritt des vorgeschlagenen Verfahrens dargestellt. Dazu werden in einem ersten Verfahrensschritt S1 alle SW-Komponenten eines SW-Images identifiziert und Schwachstellen in jeder identifizierten SW-Komponente durch Abfrage einer Schwachstellendatenbank ermittelt, siehe Verfahrensschritt S2. In der Schwachstellendatenbank sind bereits bekannte Schwachstellen von SW-Komponenten gespeichert. Die SW-Komponenten und deren Schwachstellen werden bevorzugt auf einem Referenzrechner oder auf einer Zusammenbauvorrichtung eines Herstellers des SW-Images identifiziert bzw. ermittelt. Im Verfahrensschritt S3 werden alle den ermittelten Schwachstellen der identifizierten Software-Komponenten zugeordnete Exploits anhand einer Exploit-Datenbank ermittelt und in Verfahrensschritt S4 dem SW-Image zugeordnet. Dabei wird davon ausgegangen, dass mindestens eine Schwachstelle im SW-Image ermittelt wird und die Exploit-Datenbank mindestens einen Exploit für jede bekannte SW-Schwachstelle umfasst. Die den Schwachstellen zugeordneten Exploits können beispielsweise von der Schwachstellendatenbank bei der Exploit-Datenbank abgefragt werden.

Anschließend wird das SW-Image und die dem SW-Image zugeordneten Exploits auf einer für den Zielrechner spezifischen Konfiguration einer Laufzeitumgebung ausgeführt, siehe Verfahrensschritt S5. Führt das Ausführen des Exploits zu einer Ausnutzbarkeit, **d.h.** wird dadurch ein ungewollter Zugriff auf die Laufzeitumgebung ermöglicht, wird die Ausnutzbarkeit bestätigt, siehe Verfahrensschritt S6 und die bestätigte ausnutzbare Schwachstelle an mindestens einen Nutzer des Zielrechners und/oder einen Hersteller des SW-Images gemeldet, siehe S7.

Durch Ausführung der Exploits in der Laufzeitumgebung des Software-Images kann eine Ausnutzbarkeit der Schwachstelle auf genau der einen gewählten Konfiguration der Laufzeitumgebung, die spezifisch für den Zielrechner ist, verifiziert werden. Die mindestens eine als ausnutzbar bestätigte Schwachstelle wird beispielsweise an alle Nutzer von Zielrechnern gemeldet, deren Zielrechner die gleiche Konfiguration der Laufzeitumgebung aufweisen. Der Nutzer kann daraufhin Maßnahmen ergreifen, beispielsweise das SW-Image nicht weiter ausführen und/oder eine modifizierte, nicht ausnutzbare Version des SW-Images installieren.

Die mindestens eine ausnutzbare Schwachstelle wird zusätzlich oder ausschließlich dem Hersteller bzw. Entwickler des SW-Images gemeldet. Dadurch wird der Hersteller über eine Dringlichkeit der Schwachstellenbeseitigung informiert oder kann die Dringlichkeit der Schwachstellenbeseitigung selbst ermitteln. Ein modifiziertes, nicht ausnutzbares SW-Image kann abhängig von einer Richtlinie, die in einer Zusammenbauvorrichtung, auch Build-System genannt, des Herstellers zum Zusammenbauen des SW-Images hinterlegt ist und abhängig von der mindestens einen bestätigten ausnutzbaren Schwachstelle erstellt werden. Dieses neu erstellte modifizierte SW-Image wird anschließend dem einen oder allen Zielrechnern, die die spezifische Konfiguration der Laufzeitumgebung aufweisen, bereitgestellt. Das modifizierte SW-Image wird beispielsweise in einem SW-Repositorium abgespeichert und kann von dort vom Zielrechner abgerufen oder automatisch in den einen oder mehrere Zielrechner eingespielt werden.

Die Analyse des SW-Images auf Schwachstellen und deren Ausnutzbarkeit kann beispielsweise nach einem Erstellungsprozess des SW-Images, insbesondere nach dem Zusammenbauen des SW-Images durchgeführt werden. Da im Laufe der Zeit weitere Schwachstellen des SW-Images erkannt werden die Verfahrensschritte bevorzugt auch in vorgegebenen zeitlichen Abständen oder nach vorgegebenen Ereignissen, beispielsweise dem Bekanntwerden einer neuen Schwachstelle erneut für das gleiche SW-Image durchgeführt.

Figur 2 zeigte ein System 10 zur automatischen Analyse von SW-Images bezüglich der Ausnutzbarkeit von Schwachstellen auf einem Zielrechner, das derart konfiguriert ist, das beschriebene Verfahren auszuführen. Das System 10 umfasst eine Analyseeinheit 11 sowie eine Testeinheit 16. Die Analyseeinheit 11 umfasst ein Referenzrechner oder eine Zusammenbauvorrichtung 12, die derart ausgebildet sind, das SW-Image auszuführen, und auf dem die einzelnen SW-Komponenten des SW-Images identifizierbar und alle Schwachstellen von jeder der identifizierten SW-Komponenten zu ermittelbar sind. Die Analyseeinheit 11 umfasst dazu einen Komponentenscanner 13, der die SW-Komponenten des SW-Images identifiziert. Das Analysesystem 11 umfasst des Weiteren eine Schwachstellendatenbank 14 auf der die Schwachstellen der SW-Komponenten abgespeichert sind und eine Exploitdatenbank 15 auf denen mindestens ein Exploit für jede Schwachstelle abgespeichert ist, mit dem die Ausnutzbarkeit der Schwachstelle auf einem SW-Image überprüft werden kann. Die Analyseeinheit 11 ist derart ausgebildet, die ermittelten Exploits dem SW-Image zuzuordnen.

Die Testeinheit 16 umfasst eine Laufzeitumgebung 17, die der Konfiguration einer Laufzeitumgebung des Zielrechners entspricht. Die Testeinheit 16 ist der derart ausgebildet das SW-Image und die dem SW-Image zugeordneten Exploits auszuführen. Führt das Ausführen der Exploits dazu, dass die Schwachstelle auf der Testeinheit ausgenutzt wird und die Testeinheit 16 über die Schwachstelle angreifbar ist, beispielsweise in unzulässiger Weise modifiziert oder gesteuert werden kann, so wird die Ausnutzbarkeit von der Testeinheit 16 an einen Nutzer oder einen Hersteller des SW-Images gemeldet. Die Testeinheit 16 umfasst dazu beispielsweise eine Ausgabeschnittstelle.

Anhand eines in Figur 4 dargestellten Systems 20 wird ein weiteres Ausführungsbeispiel des Verfahrens zur automatischen Analyse der Ausnutzbarkeit beschrieben bei dem SW-Images automatisch für eine Vielzahl vom Zielrechnern 31, beispielsweise eines Datennetzwerks überprüft werden. Das System 20 umfasst eine Analyseeinheit 21 und eine Testeinheit 22 mit einem SW-Image 23, das in einem Referenzrechner oder einer Zusammenbauvorrichtung vorliegt, einem Komponentenscanner 24, eine Schwachstellendatenbank 25, eine Expoitdatenbank 26, ein Image-Schwachstellen-Datenbank 27, eine Image-Schwachstellen-Datenbank 27, eine Inventardatenbank 28, ein Konfigurationsscanner 29 und ein SW-Repositorium 30.

Das SW-Image 23 einer SW-Anwendung, das mehrere SW-Komponenten umfasst und gekapselt als Container-Image oder in nicht-gekapselter Form vorliegt, wird beispielsweise in einer Zusammenbauvorrichtung in einem fortlaufendenden Integrations- und Lieferprozess, auch CI/CD Pipeline bezeichnet, erzeugt. Die Zusammenbauvorrichtung ist nicht Teil des Systems 20. Nach einem Erzeugen des SW-Images 23 wird das SW-Image 23 auf der Analyseeinheit 21 installiert. Mit Hilfe des Komponentenscanners 24 werden die SW-Komponenten des SW-Images 23 identifiziert. Der Komponentenscanner 24 kann hierbei als eigenständige Einheit betrieben werden oder in der Zusammenbauvorrichtung integriert ausgebildet sein. Das SW-Image 23 wird dem Komponentenscanner 24 entweder zentral in einem Image-Repositorium oder lokal bereitgestellt. Beim Identifizieren der SW-Komponenten wird zusätzliche Herstellungsinformation, insbesondere eine Versionskennung, der SW-Komponenten ermittelt. Durch den Komponentenscanner 24 wird für das SW-Image 23 somit eine Komponentenliste inklusive Version der Komponente erstellt. Die SW-Komponenten können mit Hilfe eines Paketmanagers innerhalb des SW-Images 23 oder beispielsweise abhängig von einer Signatur der SW-Komponente identifiziert werden.

Ist die Komponentenliste erstellt, erfolgt ein Abgleich mit der Schwachstellendatenbank 25. Dabei wird dem SW-Image anhand der identifizierten SW-Komponenten zugewiesen, welche Schwachstellen es enthält. Die Exploitdatenbank 26, die optional in der Schwachstellendatenbank 25 integriert ist, enthält für jede Schwachstelle mindestens ein Exploit, das Information enthält wie die Verwundbarkeit überprüft werden kann. Das Exploit umfasst beispielsweise eine Abfolge von Kommandos auf der Laufzeitumgebung oder eine Abfrage auf ein extern zugreifbares Interface.

Auf Basis der detektierten Schwachstellen schreibt der Schwachstellenscanner 24 ein dem SW-Image zugeordnetes für das SW-Image spezifisches Schwachstellenprofil, das die identifizierten SW-Komponenten, die ermittelten Schwachstellen und die ermittelten Exploits umfasst, auf die Image-Schwachstellen-Datenbank 27. Das Abspeichern des SW-Image spezifische Schwachstellenprofil in der Image-Schwachstellen-Datenbank 27 kann in vorgegebenen zeitlichen Abständen, beispielsweise zyklisch oder eventgesteuert, beispielsweise bei jedem SW-Image Build innerhalb der CI/CD Pipeline, erfolgen.

Unterschiedliche Konfigurationen von Laufzeitumgebungen werden anhand einer Inventardatenbank 28 ermittelt. In der Inventardatenbank 28 wird vorgehalten, welche Konfigurationen von Laufzeitumgebungen welche SW-Images 23 betreiben und wie diese im Datennetzwerk erreichbar sind. Eine Laufzeitumgebung wird auf einem Zielrechner bereitgestellt. In der Inventardatenbank werden auch die Zielrechner 31, die mit der jeweiligen Konfiguration von Laufzeitumgebung betrieben werden, und wie diese im Datennetzwerk erreichbar sind, bereitgestellt.

Die Inventardatenbank 28 wird auf zwei Arten aktuell gehalten.

In einer Ausführungsform wird die Konfiguration der Laufzeit-umgebung des Zielrechners 31, auf der das SW-Image 23 ausgeführt wird, vom Zielrechner 31 ermittelt und an eine Inventardatenbank 28 übermittelt wird. D.h. die darunterliegende Laufzeitumgebung des Zielrechners 31 meldet die auf dieser Laufzeitumgebung aktiven SW-Images mit Hilfe eines Zusatzmoduls, beispielsweise einem Plugin oder eines auf dem System betriebenen Agenten ein. Die Aktualisierung kann sowohl periodisch als auch eventgesteuert, z.B. beim Starten oder Beenden einer Container-Instanz aus einem Container-Image erfolgen.

In einer weiteren Ausführungsform wird das SW-Image 23 auf einem Zielrechner 31 durch den Konfigurationsscanner 29 identifiziert, indem der Zielrechner 31 durch gezieltes Durchführen von Aktionen von außen identifiziert wird. Hierbei wird überprüft, ob bestimmte Dienste offen sind oder z.B. bestimmte Server-Strings, beispielsweise bei den Abfragen bereitgestellt werden oder z.B. die MAC-Adressen und die darin kodierte Herstellerinformation ausgewertet werden. Der Konfigurationsscanner 29 ermittelt die Konfiguration der Laufzeitumgebung des Zielrechners somit abhängig von offenen Diensten auf dem Zielrechner 31, Antwortnachrichten des Zielrechners 31 auf an den Zielrechner 31 gestellte Abfragen, oder einer Kennung des Zielrechners 31. Der Konfigurationsscanner 29 muss hierbei nach dem Ausschlussverfahren mit Hilfe spezifischer Tests herausfinden, welches SW-Image potenziell auf einem Zielrechner 31 betrieben wird.

Ist die Inventardatenbank 28 mit den zugehörigen SW-Images erstellt, können periodisch oder bei der Veröffentlichung kritischer Schwachstellen für jede hinterlegte SW-Instanz, d.h. Container-Instanz oder herkömmliche, nicht gekapselte SW-Instanz, und dem damit assoziierten SW-Image spezifische Schwachstellentests durch den Konfigurationsscanner 29 durchgeführt werden, wodurch ermittelt werden kann, ob die im SW-Image bereitgestellten Schwachstellen auch tatsächlich exponiert, d.h. im Zielrechner aktiv betrieben werden. Der Zielrechner selbst entspricht in dieser Ausführungsform die Testeinheit, siehe Testeinheit 16 in Fig.2, auf der die Exploits ausgeführt und somit überprüft wird, ob die Schwachstelle tatsächlich ausnutzbar ist.

Wird festgestellt, dass eine Schwachstelle ausnutzbar ist, wird über eine Reporting-/Alarmierungskomponente, bevorzugt im Zielrechner 31, ein Alarm ausgelöst und das Ergebnis an den Hersteller des SW-Images, insbesondere an eine Build-Komponente für das Image, zurückgeliefert. Dadurch erhält der Entwickler des SW-Images entweder eine Rückmeldung, dass das SW-Image in einer bestimmten Konfiguration der Laufzeitumgebung Schwachstelleninformationen enthält und diese ausnutzbar sind. Es wird alternativ oder zusätzlich automatisch eine Aktualisierung des SW-Images angestoßen, bei der die identifizierte SW-Komponente aktualisiert wird, indem ein publizierter Patch automatisch auf den oder mehrere Zielrechner 31 eingebracht wird. Des Weiteren können weitere mit der Schwachstelle identifizierte empfohlene Konfigurationsänderungen an der Laufzeitumgebung des oder der Zielrechner 31 durchgeführt werden oder lediglich die neueste Version auf diese installiert werden.

Ist eine neue SW-Image-Version bereitgestellt, kann diese beispielsweise im SW-Repositorium bereitgestellt und somit publiziert werden, und gezielt dafür gesorgt werden, dass betroffene Laufzeitumgebungen bzw. Zielrechner 31 vorrangig mit der neuen SW-Imageversion ohne Schwachstellen versorgt werden.

Durch das beschriebene Verfahren und System können Schwachstellen nicht nur auf Basis des SW-Images identifiziert, sondern zusätzlich durch gezielte Tests auf nach außen exponierten Diensten auf der Laufzeitumgebung verifiziert werden. Dem Entwickler kann durch den Konfigurationsscanner 29 mitgeteilt werden, welche Zielrechner 31 vorrangig mit neuen SW-Images versorgt werden sollen. Automatische Builds können neue SW-Images erzeugen, indem empfohlene Maßnahmen, wie beispielsweise Einspielen einer neueren Software-Version gezielt umgesetzt werden. Es kann bei Zielrechnern, die besonders kritische SW-Images vorhalten, ermittelt werden, welche Zielrechner vorrangig durch Einbringung eines neuen SW-Images gepatcht, also aktualisiert, werden sollen.

Alle Verfahrensschritte können durch die entsprechenden Geräte implementiert werden, die zum Ausführen des jeweiligen Verfahrensschrittes geeignet sind. Alle Funktionen, die von gegenständlichen Merkmalen ausgeführt werden können, können ein Verfahrensschritt des Verfahrens sein. Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur automatischen Analyse einer Ausnutzbarkeit von Schwachstellen eines auf einem Zielrechner (31) ausgeführten Software-Images (12, 23), umfassend
- Identifizieren (S1) aller im dem Software-Image enthaltenen Software-Komponenten,
- Ermitteln (S2) von Schwachstellen der identifizierten Software-Komponente für jede Software-Komponente des Software-Images (12, 23) anhand einer Schwachstellendatenbank (14, 25),
- Ermitteln (S3) von allen der mindestens einen ermittelten Schwachstelle der Software-Komponente zugeordneten Exploits für jede identifizierte Software-Komponente anhand einer Exploit-Datenbank (15, 26),
- Zuordnen (S4) der ermittelten Exploits zu dem Software-Image (12, 23), und
- Ausführen (S5) des Software-Images (12, 23) und der dem Software-Image (12, 23) zugeordneten Exploits auf einer für den Zielrechner (31) spezifischen Konfiguration einer Laufzeitumgebung, und
- Bestätigen (S6) der Ausnutzbarkeit der mindestens einen identifizierten Schwachstelle auf der spezifischen Konfiguration der Laufzeitumgebung (31), wenn das Ausführen des mindestens einen Exploits zu einer Ausnutzung der Schwachstelle führt,
wobei ein modifiziertes, nicht ausnutzbares Software-Image abhängig von einer in einer Zusammenbauvorrichtung des Herstellers zum Zusammenbauen des Software-Images hinterlegten Richtlinie und abhängig von der mindestens einen bestätigten ausnutzbaren Schwachstelle erstellt wird und das modifizierte Software-Image dem einen oder allen Zielrechnern, die die spezifische Konfiguration der Laufzeitumgebung aufweisen, bereitgestellt wird.

2. Verfahren nach Anspruch 1, wobei die mindestens einen ausnutzbare Schwachstelle an einen Nutzer des Zielrechners (31) und/oder einen Hersteller des Software-Images gemeldet wird (S7).

3. Verfahren nach einem der vorangehenden Ansprüche, wobei die Verfahrensschritte nach einem Zusammenbauen des Software-Images (12, 23) beim Hersteller und/oder in vorgegebenen zeitlichen Abständen und/oder nach vorgegebenen Ereignissen ausgeführt werden. .

4. Verfahren nach Anspruch 1, wobei das modifizierte Software-Image auf einem Software-Repositorium (30) bereitgestellt wird.

5. Verfahren nach Anspruch 1 oder 4, wobei das modifizierte Software-Image durch den Zielrechner abgerufen oder automatisch in den Zielrechner (31) eingespielt wird.

6. Verfahren nach Anspruch 1 oder 4, wobei das modifizierte Software-Image automatisch in weitere Zielrechner (31) mit der gleichen Konfiguration der Laufzeitumgebung eingespielt wird.

7. Verfahren nach einem der vorangehenden Ansprüche, wobei die Software-Komponenten und deren Schwachstellen auf einem Referenzrechner (17) oder auf einer Zusammenbauvorrichtung des Herstellers identifiziert werden.

8. Verfahren nach einem der vorangehenden Ansprüche, wobei die Software-Komponenten abhängig von einer Signatur der Software-Komponente oder mittels eines Paketmanagers innerhalb des Software-Images (12, 23) identifiziert werden.

9. Verfahren nach einem der vorangehenden Ansprüche, wobei zusätzliche Herstellungsinformation, insbesondere eine Versionskennung, zu der mindestens einen identifizierten Software-Komponenten ermittelt wird.

10. Verfahren nach einem der vorangehenden Ansprüche, wobei ein für das Software-Image spezifisches Schwachstellenprofil umfassend die identifizierten Software-Komponenten, die ermittelten Schwachstellen und die ermittelten Exploits auf eine Image-Schwachstellen-Datenbank (27) abgespeichert wird.

11. Verfahren nach einem der vorangehenden Ansprüche, wobei unterschiedliche Konfigurationen von Laufzeitumgebungen, bevorzugt mit den entsprechend konfigurierten Zielrechnern (31), auf denen das Software-Image ausgeführt wird, anhand einer Inventardatenbank (28) ermittelt werden.

12. Verfahren nach Anspruch 11, wobei die Konfiguration der Laufzeitumgebung des Zielrechners (31), auf der das Software-Image ausgeführt wird, vom Zielrechner (31) ermittelt und an eine Inventardatenbank (28) übermittelt wird.

13. Verfahren nach Anspruch 11, wobei die Konfiguration der Laufzeitumgebung des Zielrechners (31), auf der das Software-Image (12, 23) ausgeführt wird, von einem Konfigurationsscanner (29) ermittelt und an die Inventardatenbank (28) übermittelt wird.

14. Verfahren nach Anspruch 13, wobei der Konfigurationsscanner (29) die Konfiguration der Laufzeitumgebung des Zielrechners (31) abhängig von offenen Diensten auf dem Zielrechner (31), Antwortnachrichten des Zielrechners (31) auf an den Zielrechner (31) gestellte Abfragen, oder einer Kennung des Zielrechners (31) ermittelt.

15. System (20) zur automatischen Analyse einer Ausnutzbarkeit von Schwachstellen eines auf einem Zielrechner (31) ausgeführten Software-Images (12, 23), umfassend
eine Analyseeinheit (11, 21), die derart ausgebildet ist
- alle im dem Software-Image (12, 23) enthaltenen Software-Komponenten zu identifizieren,
- Schwachstellen der identifizierten Software-Komponente für jede Software-Komponente des Software-Images (12, 23) anhand einer Schwachstellendatenbank (14, 25) zu ermitteln,
- alle der mindestens einen ermittelten Schwachstelle der Software-Komponente zugeordneten Exploits für jede identifizierte Software-Komponente anhand einer Exploit-Datenbank (15, 26) zu ermitteln,
- die ermittelten Exploits dem Software-Image (12, 23) zuzuordnen, und
eine Testeinheit (12, 22), die derart ausgebildet ist
- das Software-Image (12, 23) und die dem Software-Image (12, 23) zugeordneten Exploits auf einer für den Zielrechner (31) spezifischen Konfiguration einer Laufzeitumgebung auszuführen,
- die Ausnutzbarkeit der mindestens einen identifizierten Schwachstelle auf der spezifischen Konfiguration der Laufzeitumgebung zu bestätigen, wenn das Ausführen des mindestens einen Exploits zu einer Ausnutzung der Schwachstelle führt;
wobei ein modifiziertes, nicht ausnutzbares Software-Image abhängig von einer in einer Zusammenbauvorrichtung des Herstellers zum Zusammenbauen des Software-Images hinterlegten Richtlinie und abhängig von der mindestens einen bestätigten ausnutzbaren Schwachstelle erstellt wird und das modifizierte Software-Image dem einen oder allen Zielrechnern, die die spezifische Konfiguration der Laufzeitumgebung aufweisen, bereitgestellt wird.

16. Computerprogrammprodukt, umfassend ein nicht flüchtiges computerlesbares Medium, das direkt in einen Speicher eines digitalen Computers ladbar ist, umfassend Programmcodeteile, die bei Ausführung der Programmcodeteile durch den digitalen Computer diesen veranlassen, die Schritte des Verfahrens nach einem der Ansprüche 1 bis 14 durchzuführen.

## Claims

1. Method for the automatic analysis of the exploitability of vulnerabilities of a software image (12, 23) executed on a target computer (31), comprising
- identifying (S1) all software components contained in the software image,
- determining (S2) vulnerabilities of the identified software component for each software component of the software image (12, 23) using a vulnerability database (14, 25),
- determining (S3) all exploits associated with the at least one determined vulnerability of the software component, for each identified software component, using an exploit database (15, 26),
- associating (S4) the determined exploits with the software image (12, 23), and
- executing (S5) the software image (12, 23) and the exploits associated with the software image (12, 23) on a configuration of a runtime environment specific to the target computer (31), and
- confirming (S6) the exploitability of the at least one identified vulnerability on the specific configuration of the runtime environment (31) if the execution of the at least one exploit leads to exploitation of the vulnerability,
wherein a modified, non-exploitable software image is created depending on a policy stored in a manufacturer's assembly device for assembling the software image and depending on the at least one confirmed exploitable vulnerability, and the modified software image is provided to one or all of the target computers that have the specific configuration of the runtime environment.

2. Method according to Claim 1, wherein the at least one exploitable vulnerability is reported to a user of the target computer (31) and/or to a manufacturer of the software image (S7) .

3. Method according to either of the preceding claims, wherein the method steps are carried out after assembly of the software image (12, 23) at the manufacturer and/or at predetermined time intervals and/or after predetermined events.

4. Method according to Claim 1, wherein the modified software image is provided on a software repository (30).

5. Method according to Claim 1 or 4, wherein the modified software image is retrieved by the target computer or automatically imported into the target computer (31).

6. Method according to Claim 1 or 4, wherein the modified software image is automatically imported into further target computers (31) with the same configuration of the runtime environment.

7. Method according to any of the preceding claims, wherein the software components and their vulnerabilities are identified on a reference computer (17) or on a manufacturer's assembly device.

8. Method according to any of the preceding claims, wherein the software components are identified depending on a signature of the software component or by means of a package manager within the software image (12, 23).

9. Method according to any of the preceding claims, wherein additional manufacturing information, in particular a version identifier, is determined for the at least one identified software components.

10. Method according to any of the preceding claims, wherein a vulnerability profile, specific to the software image and comprising the identified software components, the determined vulnerabilities and the determined exploits, is stored on an image vulnerability database (27).

11. Method according to any of the preceding claims, wherein different configurations of runtime environments, preferably with the correspondingly configured target computers (31) on which the software image is executed, are determined by means of an inventory database (28).

12. Method according to Claim 11, wherein the configuration of the runtime environment of the target computer (31), on which the software image is executed, is determined by the target computer (31) and transmitted to an inventory database (28).

13. Method according to Claim 11, wherein the configuration of the runtime environment of the target computer (31), on which the software image (12, 23) is executed, is determined by a configuration scanner (29) and transmitted to the inventory database (28).

14. Method according to Claim 13, wherein the configuration scanner (29) determines the configuration of the runtime environment of the target computer (31) depending on open services on the target computer (31), response messages of the target computer (31) to queries directed to the target computer (31), or an identifier of the target computer (31).

15. System (20) for the automatic analysis of the exploitability of vulnerabilities of a software image (12, 23) executed on a target computer (31), comprising
an analysis unit (11, 21), which is designed to
- identify all software components contained in the software image (12, 23),
- determine vulnerabilities of the identified software component for each software component of the software image (12, 23) using a vulnerability database (14, 25),
- determine all exploits associated with the at least one determined vulnerability of the software component, for each identified software component, using an exploit database (15, 26),
- associate the determined exploits with the software image (12, 23), and
a test unit (12, 22), which is designed to
- execute the software image (12, 23) and the exploits associated with the software image (12, 23) on a configuration of a runtime environment specific to the target computer (31),
- confirm the exploitability of the at least one identified vulnerability on the specific configuration of the runtime environment if the execution of the at least one exploit leads to exploitation of the vulnerability;
wherein a modified, non-exploitable software image is created depending on a policy stored in a manufacturer's assembly device for assembling the software image and depending on the at least one confirmed exploitable vulnerability, and the modified software image is provided to one or all of the target computers that have the specific configuration of the runtime environment.

16. Computer program product, comprising a non-volatile computer-readable medium which can be loaded directly into a memory of a digital computer, comprising program code parts which when they are executed by the digital computer cause said computer to carry out the steps of the method according to any of Claims 1 to 14.

## Revendications

1. Procédé pour l'analyse automatique d'une exploitabilité de vulnérabilités d'une image logicielle (12, 23) exécutée sur un calculateur cible (31), comportant
- l'identification (S1) de tous les composants logiciels contenus dans l'image logicielle,
- la détermination (S2) de vulnérabilités du composant logiciel identifié pour chaque composant logiciel de l'image logicielle (12, 23) à l'aide d'une base de données de vulnérabilités (14, 25),
- la détermination (S3) de tous les exploits associés à l'au moins une vulnérabilité déterminée du composant logiciel pour chaque composant logiciel identifié à l'aide d'une base de données d'exploits (15, 26),
- l'association (S4) des exploits déterminés à l'image logicielle (12, 23), et
- l'exécution (S5) de l'image logicielle (12, 23) et des exploits associés à l'image logicielle (12, 23) sur une configuration spécifique du calculateur cible (31) d'un environnement d'exécution, et
- la confirmation (S6) de l'exploitabilité de l'au moins une vulnérabilité identifiée sur la configuration spécifique de l'environnement d'exécution (31) si l'exécution de l'au moins un exploit conduit à une exploitation de la vulnérabilité,
dans lequel une image logicielle modifiée, non exploitable est établie en fonction d'une politique déposée dans un dispositif d'assemblage du fabricant pour l'assemblage de l'image logicielle et en fonction de l'au moins une vulnérabilité exploitable confirmée et l'image logicielle modifiée est fournie à l'un des calculateurs cibles ou à tous les calculateurs cibles qui présentent la configuration spécifique de l'environnement d'exécution.

2. Procédé selon la revendication 1, dans lequel l'au moins une vulnérabilité exploitable est signalée (S7) à un utilisateur du calculateur cible (31) et/ou à un fabricant de l'image logicielle.

3. Procédé selon l'une des revendications précédentes, dans lequel les étapes de procédé sont exécutées selon un assemblage de l'image logicielle (12, 23) chez le fabricant et/ou à des intervalles de temps prédéfinis et/ou selon des événements prédéfinis.

4. Procédé selon la revendication 1, dans lequel l'image logicielle modifiée est fournie sur un référentiel logiciel (30).

5. Procédé selon la revendication 1 ou la revendication 4, dans lequel l'image logicielle modifiée est consultée par le calculateur cible ou enregistrée automatiquement dans le calculateur cible (31).

6. Procédé selon la revendication 1 ou la revendication 4, dans lequel l'image logicielle modifiée est enregistrée automatiquement dans d'autres calculateurs cibles (31) avec la même configuration de l'environnement d'exécution.

7. Procédé selon l'une des revendications précédentes, dans lequel les composants logiciels et leurs vulnérabilités sont identifiés sur un calculateur de référence (17) ou sur un dispositif d'assemblage du fabricant.

8. Procédé selon l'une des revendications précédentes, dans lequel les composants logiciels sont identifiés en fonction d'une signature du composant logiciel ou au moyen d'un gestionnaire de paquets à l'intérieur de l'image logicielle (12, 23).

9. Procédé selon l'une des revendications précédentes, dans lequel des informations de fabrication supplémentaires, en particulier un identifiant de version, sont déterminées pour l'au moins un composant logiciel identifié.

10. Procédé selon l'une des revendications précédentes, dans lequel un profil de vulnérabilités spécifique de l'image logicielle comportant les composants logiciels identifiés, les vulnérabilités déterminées et les exploits déterminés est stocké sur une base de données de vulnérabilités d'image (27).

11. Procédé selon l'une des revendications précédentes, dans lequel des configurations différentes d'environnements d'exécution, de préférence avec les calculateurs cibles (31) configurés en conséquence, sur lesquels est exécutée l'image logicielle sont déterminées à l'aide d'une base de données d'inventaire (28).

12. Procédé selon la revendication 11, dans lequel la configuration de l'environnement d'exécution du calculateur cible (31) sur lequel est exécutée l'image logicielle est déterminée par le calculateur cible (31) et transmise à une base de données d'inventaire (28).

13. Procédé selon la revendication 11, dans lequel la configuration de l'environnement d'exécution du calculateur cible (31) sur lequel est exécutée l'image logicielle (12, 23) est déterminée par un scanner de configuration (29) et transmise à la base de données d'inventaire (28).

14. Procédé selon la revendication 13, dans lequel le scanner de configuration (29) détermine la configuration de l'environnement d'exécution du calculateur cible (31) en fonction de services ouverts sur le calculateur cible (31), de messages de réponse du calculateur cible (31) à des requêtes envoyées au calculateur cible (31), ou d'un identifiant du calculateur cible (31).

15. Système (20) pour l'analyse automatique d'une exploitabilité de vulnérabilités d'une image logicielle (12, 23) exécutée sur un calculateur cible (31), comportant
une unité d'analyse (11, 21), laquelle est conçue pour
- identifier tous les composants logiciels contenus dans l'image logicielle (12, 23),
- déterminer des vulnérabilités du composant logiciel identifié pour chaque composant logiciel de l'image logicielle (12, 23) à l'aide d'une base de données de vulnérabilités (14, 25),
- déterminer tous les exploits associés à l'au moins une vulnérabilité déterminée du composant logiciel pour chaque composant logiciel identifié à l'aide d'une base de données d'exploits (15, 26),
- associer les exploits déterminés à l'image logicielle (12, 23), et
une unité de test (12, 22), laquelle est conçue pour
- exécuter l'image logicielle (12, 23) et les exploits associés à l'image logicielle (12, 23) sur une configuration spécifique du calculateur cible (31) d'un environnement d'exécution,
- confirmer l'exploitabilité de l'au moins une vulnérabilité identifiée sur la configuration spécifique de l'environnement d'exécution si l'exécution de l'au moins un exploit conduit à une exploitation de la vulnérabilité ;
dans lequel une image logicielle modifiée, non exploitable est établie en fonction d'une politique déposée dans un dispositif d'assemblage du fabricant pour l'assemblage de l'image logicielle et en fonction de l'au moins une vulnérabilité exploitable confirmée et l'image logicielle modifiée est fournie à l'un des calculateurs cibles ou à tous les calculateurs cibles qui présentent la configuration spécifique de l'environnement d'exécution.

16. Produit de programme informatique, comportant un support non volatil lisible par ordinateur, lequel est chargeable directement dans une mémoire d'un ordinateur numérique, comportant des parties de code de programme qui, lors de l'exécution des parties de code de programme par l'ordinateur numérique, amènent celui-ci à mettre en œuvre les étapes du procédé selon l'une des revendications 1 à 14.
